# EUROPEAN PATENT APPLICATION

(11) **EP 4 775 747 A1**
(43) Date of publication of application: **15.07.2026**
(21) Application number: 24862413.2
(22) Date of filing: 17.06.2024
(51) Int. Cl.: E02F 9/24, E02F 9/20, E02F 9/26

(54) **WORK MACHINE**

(30) Priority: 05.09.2023 JP 2023143913
(71) Applicant: Hitachi Construction Machinery Co., Ltd., Tokyo 110-0015 (JP)
(72) Inventor: MORIKI, Hidekazu, Tsuchiura-shi, Ibaraki 300-0013 (JP); SHIWAKU, Kouji, Tsuchiura-shi, Ibaraki 300-0013 (JP); INADA, Ryou, Tsuchiura-shi, Ibaraki 300-0013 (JP); IMURA, Shinya, Tsuchiura-shi, Ibaraki 300-0013 (JP)
(74) Representative: MERH-IP Matias Erny Reichl Hoffmann Patentanwälte PartG mbB
(86) International application number: PCT/JP2024/021799
(87) International publication number: WO 2025/052756

(57) **Abstract**

To provide a work machine that can efficiently perform loading work by appropriately positioning the hauling vehicle relative to the work machine. The work machine of the present invention includes a loading preparation support device, which is a controller that supports loading preparation until a hauling vehicle approaches the work machine for loading from the work machine to the hauling vehicle based on the position information of the work machine and the hauling vehicle, and an actuator control device that controls the operation of the work machine's actuator according to commands from the loading preparation support device. The loading preparation support device includes a loadable range calculation section that calculates the loadable range as information indicating the range where the hauling vehicle should stop during loading based on the movable range of the work machine, and a loading possibility determination section that determines the possibility of loading to the hauling vehicle based on the information of the loading portion of the hauling vehicle moved from the standby position based on the loadable range, and the loadable range. The loading possibility determination section determines that loading to the hauling vehicle is possible if the loading portion of the hauling vehicle is included in the loadable range. Then, the work machine starts the loading work to the hauling vehicle by controlling the operation of the actuator with the actuator control device when it is determined that loading to the hauling vehicle is possible.

## Description

### Technical Field

The present invention relates to work machines.

### Background Art

Work machines such as hydraulic excavators are used for loading objects like earth and sand onto hauling vehicles such as dump trucks (hereinafter referred to as loading work). At this time, in addition to the time required for the loading work itself, the time required for loading preparation until the hauling vehicle approaches the work machine contributes to the productivity of the work site.

For example, Patent Literature 1 describes a system comprising a hauling vehicle and a work machine for loading materials onto the hauling vehicle. In Patent Literature 1, the work machine includes a first position sensor and a first processor, where the first position sensor detects the position of the work machine, and the first processor acquires data indicating the position of the work machine detected by the first position sensor and determines the target stop position of the hauling vehicle based on the position of the work machine. Additionally, the hauling vehicle includes a communication device, a second position sensor, and a second processor, where the communication device communicates with the work machine, the second position sensor detects the position of the hauling vehicle, and the second processor acquires data indicating the target stop position from the work machine and controls the hauling vehicle to move to the target stop position.

### Citation List

### Patent Literature

Patent Literature 1: JP 7156898 B2

### Summary of Invention

### Technical Problem

However, the system described in Patent Literature 1 may not necessarily optimize the time required for loading work and loading preparation.

For example, depending on the starting position of the hauling vehicle, multiple direction changes may be required before the hauling vehicle reaches the target stop position determined by the work machine, potentially requiring significant time for loading preparation.

Furthermore, depending on the orientation of the work machine when the hauling vehicle stops at the target stop position, an operator's seat or the mounting portion of the autonomous driving sensors on the hauling vehicle may be positioned on the loading path of the work machine, posing a risk of the work machine contacting these mounting portions or spilled materials from the work machine falling onto them.

The present invention has been made in view of the above problems, and its purpose is to provide a work machine that can efficiently perform loading work by appropriately positioning the hauling vehicle relative to the work machine.

### Solution to Problem

To achieve the above objective, the work machine of the present invention includes a loading preparation support device, which is a controller that supports loading preparation until the hauling vehicle approaches the work machine for loading from the work machine to the hauling vehicle, based on the position information of the work machine and the hauling vehicle, and an actuator control device that controls the operation of the work machine's actuators according to commands from the loading preparation support device. The loading preparation support device includes a loading range calculation unit that calculates the loading range as information indicating the range where the hauling vehicle should stop during loading, based on the movable range of the work machine, and a loading possibility determination unit that determines the possibility of loading onto the hauling vehicle based on the information of the loading portion of the hauling vehicle moved from the standby position and the loading range. The loading possibility determination unit determines that loading onto the hauling vehicle is possible if the loading portion of the hauling vehicle is within the loadable range. Then, if it is determined that loading onto the hauling vehicle is possible, the work machine starts the loading work onto the hauling vehicle by controlling the operation of the actuators through the actuator control device.

### Advantageous Effects of Invention

According to the present invention, the hauling vehicle can be positioned relative to the work machine at a loadable position and a position easily reachable by the hauling vehicle, allowing efficient loading work.

Other problems, configurations, and effects not mentioned above will be clarified by the description of the following embodiments.

### Brief Description of Drawings

FIG. 1 is a top view showing an example of a loading site where a hydraulic excavator according to an embodiment of the present invention performs work.
FIG. 2 is a schematic view showing the appearance of a hydraulic excavator according to an embodiment of the present invention.
FIG. 3 is a diagram showing the control system of a hydraulic excavator according to an embodiment of the present invention.
FIG. 4 is a functional block diagram of an autonomous driving control device according to an embodiment of the present invention.
FIG. 5 is a functional block diagram of a loading preparation support device according to an embodiment of the present invention.
FIG. 6 is a functional block diagram of a hauling vehicle control device according to an embodiment of the present invention.
FIG. 7 is a plan view showing an example of a loadable range according to an embodiment of the present invention.
FIG. 8 is a map showing an example of the relationship between the circumferential range of the loadable range and the maximum loading capacity of the hauling vehicle according to an embodiment of the present invention.
FIG. 9 is a plan view showing an example of a target travel path for a hauling vehicle according to an embodiment of the present invention.
FIG. 10 is a plan view showing an example of loading possibility determination and loading prohibition necessity determination according to an embodiment of the present invention.
FIG. 11 is a flowchart of the processing performed by the loading preparation support device according to an embodiment of the present invention.
FIG. 12 is a diagram showing an example of a communication sequence diagram between the hauling vehicle and the hydraulic excavator during loading preparation according to an embodiment of the present invention.

### Description of Embodiments

Hereinafter, a hydraulic excavator will be described as an example of a work machine according to an embodiment of the present invention, with reference to the drawings. In the drawings, the same reference numerals are used for equivalent members, and redundant descriptions are omitted as appropriate.

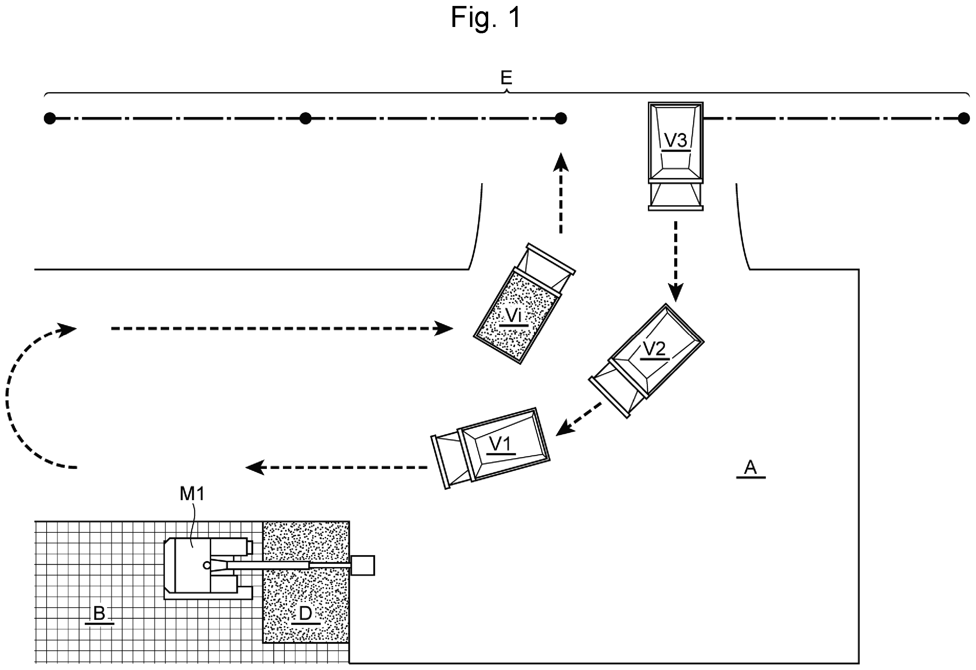

An embodiment of the present invention will be described with reference to FIGS. 1 to 12.

FIG. 1 is an example of a loading site A where the hydraulic excavator M1 according to this embodiment performs work.

In FIG. 1, the hydraulic excavator M1 is located on a platform-like moving area B, excavates the excavation target area D at the edge of the moving area B, and loads the excavated objects onto hauling vehicles V1, V2, ... Vi, ... The hauling vehicles V1, V2, ... Vi, ... enter the loading site A from the transport route E, wait for their turn to load, and after loading the objects, return to the transport route E from the loading site A to transport the objects. The information on the position of the loading site A, the moving area B, and the transport route E is pre-registered in the hydraulic excavator M1 and the hauling vehicles V1, V2, ... Vi, ....

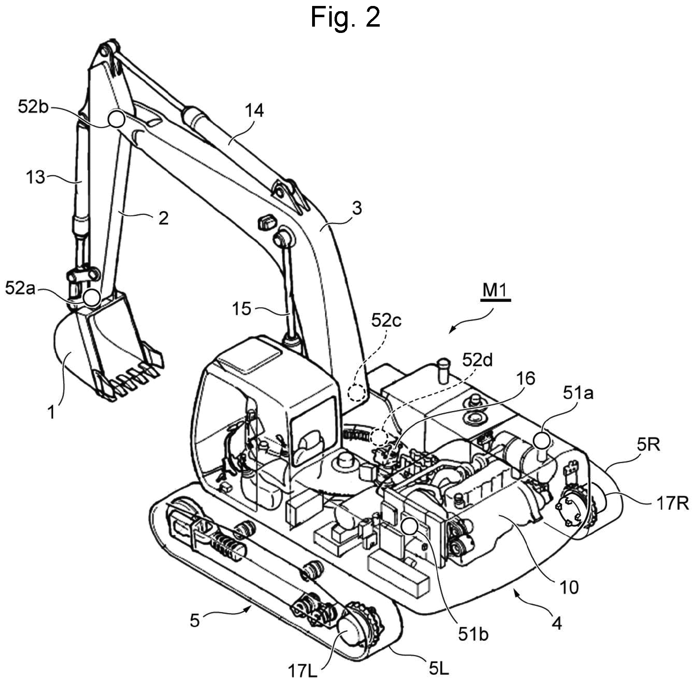

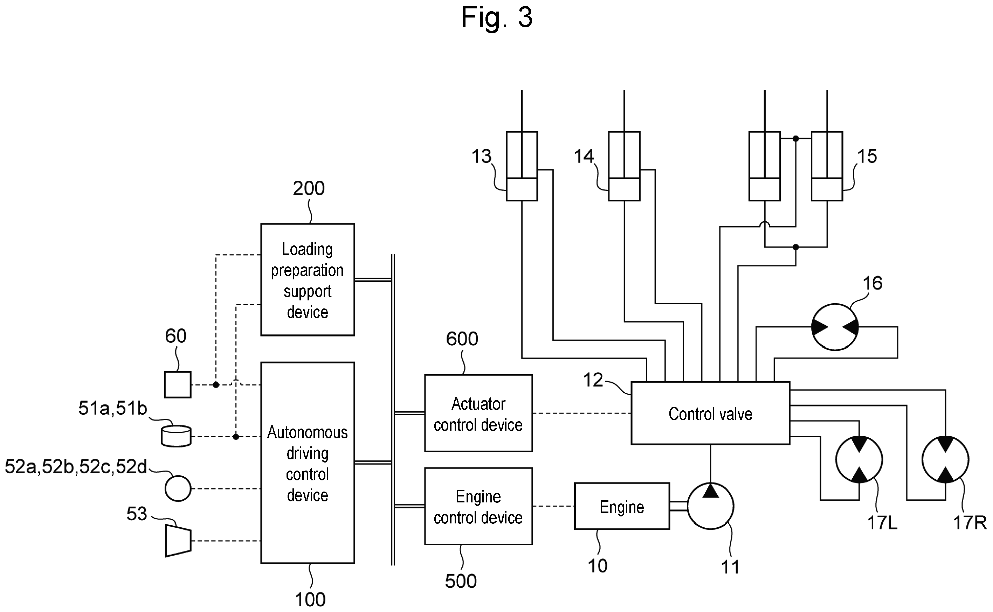

FIG. 2 is a schematic view showing the appearance of the hydraulic excavator according to this embodiment, and FIG. 3 is a diagram showing the control system of the hydraulic excavator according to this embodiment.

In FIG. 2, the hydraulic excavator M1 includes a bucket 1 as a working attachment at the front of the vehicle body, an arm 2 that rotatably supports the bucket 1, and a boom 3 that rotatably supports the base end of the arm 2. Furthermore, the hydraulic excavator M1 includes an upper swing body 4 that rotatably supports the base end of the boom 3, and a lower travel body 5 that rotatably supports the upper swing body 4.

Additionally, the lower travel body 5 of the hydraulic excavator M1 includes a right crawler 5R and a left crawler 5L, which drive the vehicle and allow it to turn based on the difference in their rotational speeds.

In this embodiment, the bucket 1 is referred to as the attachment, the components from the upper swing body 4 to the arm 2 are collectively referred to as the front work machine, and the lower travel body 5 is referred to as the travel body, as appropriate.

In FIG. 3, the control system includes an engine 10 as a power source, and the engine 10 drives a hydraulic pump 11.

The hydraulic pump 11 is driven by the engine 10 to supply hydraulic fluid to a control valve 12. The hydraulic fluid is distributed by the control valve 12 to drive hydraulic actuators, including a bucket cylinder 13, an arm cylinder 14, a boom cylinder 15, a swing motor 16, a right travel motor 17R, and a left travel motor 17L. The bucket cylinder 13, arm cylinder 14, and boom cylinder 15 extend and compress with the supply of hydraulic fluid, changing the angle of the bucket 1 relative to the arm 2, the angle of the arm 2 relative to the boom 3, and the angle of the boom 3 relative to the upper swing body 4, respectively. Additionally, the swing motor 16 rotates with the supply of hydraulic fluid, changing the angle of the upper swing body 4 relative to the lower travel body 5, and the right travel motor 17R and left travel motor 17L rotate with the supply of hydraulic fluid, driving the right crawler 5R and left crawler 5L, respectively (see also FIG. 2).

The control system also includes an autonomous driving control device 100, a loading preparation support device 200, an engine control device 500, an actuator control device 600, a communication interface 60, positioning devices 51a, 51b, posture sensors 52a, 52b, 52c, 52d, and a terrain acquisition device 53.

In this embodiment, the positioning devices 51a, 51b are devices for acquiring the position information of the work machine, and are known GNSS (Global Navigation Satellite System) (see also FIG. 2). However, the present invention is not limited to this, and the positioning devices 51a, 51b may be configured using known SLAM (Simultaneous Localization and Mapping) with cameras or LiDAR.

In this embodiment, the posture sensors 52a, 52b, 52c, and 52d are devices that acquire posture information of the work machine, and are known angle sensors, such as potentiometers (see also FIG. 2). However, the present invention is not limited to this, and the posture sensors 52a, 52b, 52c, and 52d may be configured with encoders or IMUs (Inertial Measurement Units), or a combination thereof may be used.

In this embodiment, the terrain acquisition device 53 is a device that acquires terrain information around the work machine, and is a known stereo camera or LiDAR. However, the present invention is not limited to this, and other 3D measurement devices may be used, or a combination thereof may be employed. Furthermore, the terrain acquisition device 53 does not necessarily have to be mounted on the hydraulic excavator M1, it may be mounted on the site environment or other machines.

Additionally, the communication interface 60 may be any device capable of communicating with the hauling vehicle or a hauling vehicle management system, such as a wireless communication device. The hauling vehicle management system is a system that manages the operation of the hauling vehicle, but it may also serve as a work machine management system that instructs the autonomous driving tasks to the autonomous driving control device 100 of the hydraulic excavator M1.

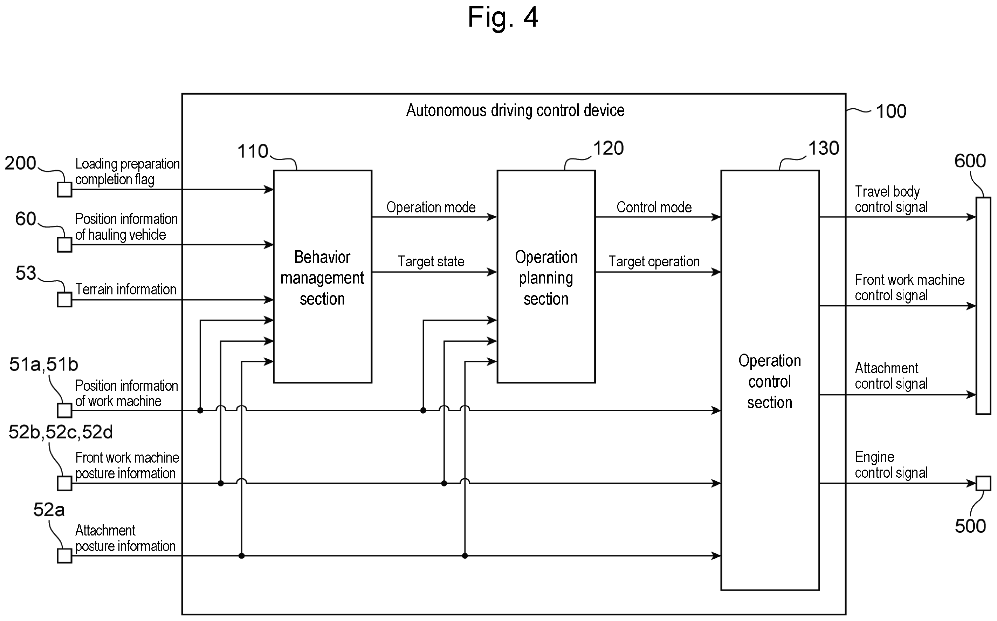

The autonomous driving control device 100 generates engine control signals and actuator control signals based on the position information of the hauling vehicle, the position information of the work machine from the positioning devices 51a and 51b, the posture information from the posture sensors 52a, 52b, 52c, and 52d, the terrain information from the terrain acquisition device 53, and the loading preparation completion flag from the loading preparation support device 200, which are communicated via the communication interface 60 from the hauling vehicle or the management system of the hauling vehicle, and sends them to the engine control device 500 and the actuator control device 600, respectively. In response to these signals, the engine control device 500 controls the speed of the engine 10, and the actuator control device 600 controls the opening and closing degree of the control valve 12 to control the operation of the hydraulic actuator (to be explained later based on FIG. 4).

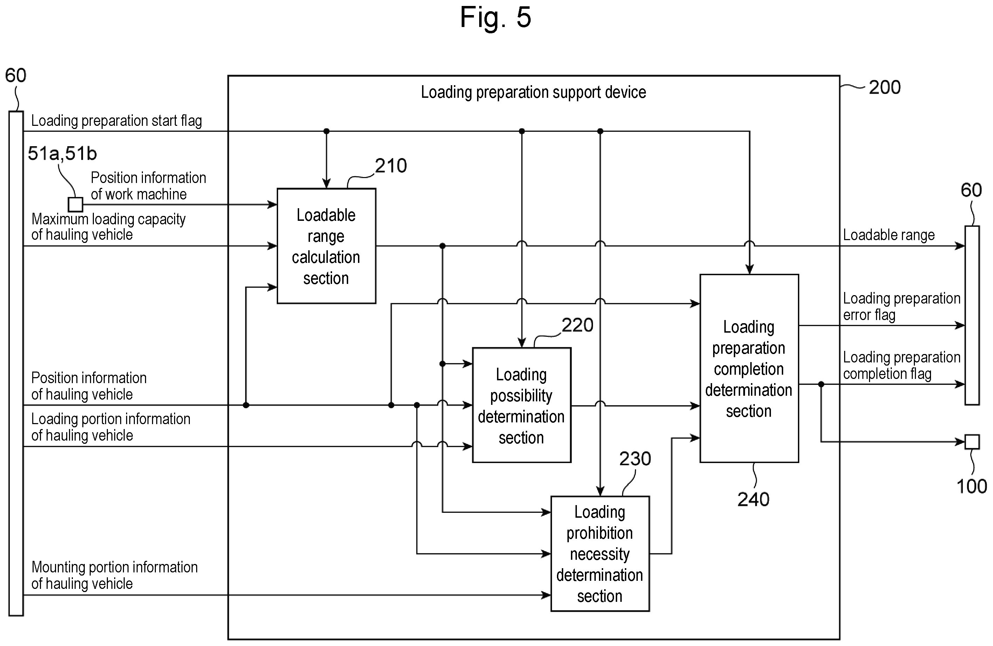

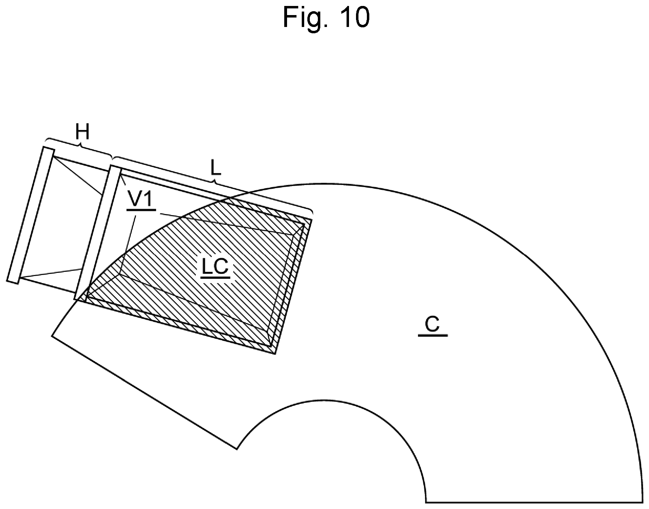

The loading preparation support device 200 receives the position information of the hauling vehicle via the communication interface 60 from the hauling vehicle or the management system of the hauling vehicle, the loading portion information (information representing the position and dimensions of the loading portion (load-carrying platform) of the hauling vehicle: explained later based on FIG. 10, etc.), the mounting portion information (information representing the position and dimensions of the mounting portion of the hauling vehicle: explained later based on FIG. 10, etc.), the maximum load capacity, the loading preparation start flag, and the position information of the work machine from the positioning devices 51a, 51b. Then, based on this information, it generates the loadable range, loading preparation completion flag, and loading preparation error flag, and sends them to the hauling vehicle or its management system, and also sends the loading preparation completion flag to the autonomous driving control device 100 (to be explained later based on FIG. 5).

FIG. 4 is a functional block diagram of the autonomous driving control device 100 according to an embodiment of the present invention.

In FIG. 4, the autonomous driving control device 100 includes a behavior management section 110, an operation planning section 120, and an operation control section 130.

The behavior management section 110 receives the position information of the hauling vehicle from the hauling vehicle or its management system via the communication interface 60, the position information of the work machine from the positioning devices 51a, 51b, the posture information (attachment posture information, front work machine posture information) from the posture sensors 52a, 52b, 52c, 52d, and the terrain information from the terrain acquisition device 53, and calculates the operation mode and target state of the hydraulic excavator M1 and sends them to the operation planning section 120. Here, the operation mode refers to the classification of the operations necessary for the hydraulic excavator M1 to perform work into modes, such as automatic movement mode, automatic excavation mode, and automatic loading mode. The target state refers to the state quantity indicating the desired result obtained by the operation of the hydraulic excavator M1, such as the target position relative to the site environment of the hydraulic excavator M1, the target position of the tip of the arm 2 relative to the lower travel body 5, the target angle of the bucket 1 relative to the horizontal plane, and the target terrain of the site environment.

The operation planning section 120 receives the operation mode and target state from the behavior management section 110, the position information of the work machine from the positioning devices 51a, 51b, and the posture information (attachment posture information, front work machine posture information) from the posture sensors 52a, 52b, 52c, 52d, and calculates the control mode and target operation, and sends them to the operation control section 130. The control mode is known trajectory control or speed control, and is calculated for each control target of the travel body, front work machine, and attachment. The target operation is calculated for each control target as the target trajectory or target speed until reaching the target state, according to the control mode and target state.

The operation control section 130 receives the control mode and target operation from the operation planning section 120, the position information of the work machine from the positioning devices 51a, 51b, and the posture information (attachment posture information, front work machine posture information) from the posture sensors 52a, 52b, 52c, 52d, and generates control signals for the travel body, front work machine, and attachment of the hydraulic excavator M1 to follow the target operation, and sends them as travel body control signals, front work machine control signals, and attachment control signals to the actuator control device 600. For example, similar to conventional manual operation, the travel body control signal may be the pedal operation amount, and the front work machine control signal and attachment control signal may be the lever operation amount. Additionally, the operation control section 130 calculates the necessary engine speed from each control signal and sends it as an engine control signal to the engine control device 500.

It should be noted that the calculations performed by the autonomous driving control device 100 are not directly related to the features of the present invention, so their detailed description is omitted.

FIG. 5 is a functional block diagram of the loading preparation support device 200 according to an embodiment of the present invention.

In FIG. 5, the loading preparation support device 200 includes a loadable range calculation section 210, a loading possibility determination section 220, a loading prohibition necessity determination section 230, and a loading preparation completion determination section 240, and starts processing of each section according to the loading preparation start flag received from the communication interface 60.

The loadable range calculation section 210 receives the position information of the work machine from the positioning devices 51a, 51b, and the position information of the hauling vehicle from the communication interface 60, calculates the loadable range, and sends it to the communication interface 60, the loading possibility determination section 220, and the loading prohibition necessity determination section 230. The loadable range is information indicating the range where the hauling vehicle should stop during loading. An example of the loadable range will be described later. Additionally, the loadable range may be corrected according to the maximum loading capacity of the hauling vehicle from the communication interface 60, and an example of this method will also be described later.

The loading possibility determination section 220 receives the loadable range from the loadable range calculation section 210, and the position information and loading portion information of the hauling vehicle from the communication interface 60, determines the possibility of loading, and sends the result to the loading preparation completion determination section 240.

The loading prohibition necessity determination section 230 receives the loadable range from the loadable range calculation section 210, and the position information and mounting portion information of the hauling vehicle from the communication interface 60, determines the necessity of loading prohibition, and sends the result to the loading preparation completion determination section 240.

An example of the determination performed by the loading possibility determination section 220 and the loading prohibition necessity determination section 230 will be described later.

The loading preparation completion determination section 240 receives the position information of the hauling vehicle from the communication interface 60, the possibility of loading from the loading possibility determination section 220, and the necessity of loading prohibition from the loading prohibition necessity determination section 230, and determines whether the loading preparation (loading preparation until the hauling vehicle approaches the work machine) is complete. If it is determined that the loading preparation is complete, it sends the loading preparation completion flag to the communication interface 60 and the autonomous driving control device 100, and if it is determined that the loading preparation is not complete, it sends the loading preparation error flag to the communication interface 60.

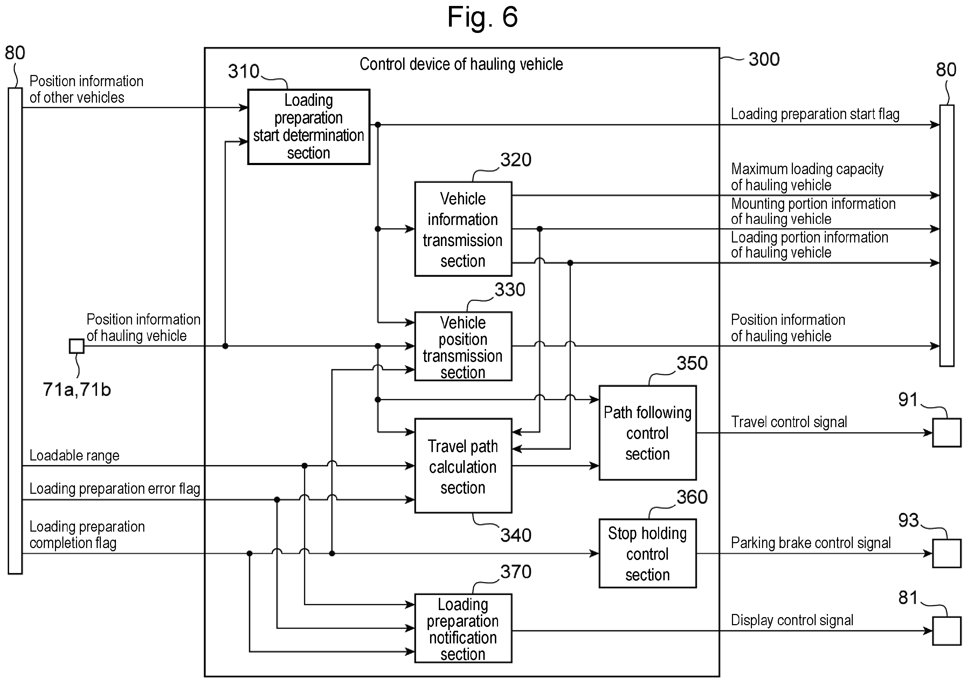

FIG. 6 is an example of a functional block diagram of the control device 300 of the hauling vehicle according to an embodiment of the present invention. In this embodiment, only the functional blocks related to loading preparation of the control device 300 of the hauling vehicle are described and explained, and the description and explanation of other functional blocks are omitted.

In FIG. 6, the control device 300 of the hauling vehicle includes a loading preparation start determination section 310, a vehicle information transmission section 320, a vehicle position transmission section 330, a travel path calculation section 340, a path following control section 350, a stop holding control section 360, and a loading preparation notification section 370.

The loading preparation start determination section 310 receives the position information of other vehicles and the position information of the hauling vehicle from the communication interface 80 and positioning devices 71a, 71b mounted on the hauling vehicle, respectively, and determines the start of loading preparation based on this position information. Then, if it is determined that loading preparation has started, the loading preparation start flag is sent to the communication interface 60 of the work machine M1 via the vehicle information transmission section 320, the vehicle position transmission section 330, and the communication interface 80. Specifically, the order in which other vehicles and the hauling vehicle arrive at the loading site A described in FIG. 1 is stored, and when other vehicles return from the loading site A to the transport route E, the order of the hauling vehicles is advanced, and when the order of the hauling vehicle at the standby position becomes first, it is determined that loading preparation has started.

The vehicle information transmission section 320 receives the loading preparation start flag from the loading preparation start determination section 310 and sends the maximum loading capacity, mounting portion information, and loading portion information of the hauling vehicle to the communication interface 60 of the work machine M1 via the communication interface 80. Details of the boarding portion information and loading portion information of the hauling vehicle will be described later. In addition, the vehicle information transmission section 320 constantly sends the mounting portion information and loading portion information of the hauling vehicle to the travel route calculation section 340.

The vehicle position transmission section 330 receives the position information of the hauling vehicle, the loading preparation start flag, and the loading preparation completion flag from the positioning devices 71a, 71b, the loading preparation start determination section 310, and the communication interface 80, respectively, and constantly sends the position information of the hauling vehicle to the communication interface of other vehicles via the communication interface 80. At the same time, the vehicle position transmission section 330 sends the position information of the hauling vehicle to the communication interface 60 of the work machine M1 via the communication interface 80 from the time it receives the loading preparation start flag until it receives the loading preparation completion flag.

The travel route calculation section 340 receives the position information of the hauling vehicle from the positioning devices 71a and 71b, and the mounting portion information/loading portion information of the hauling vehicle from the vehicle information transmission section 320. Then, when it receives either the loadable range or the loading preparation error flag from the communication interface 80, it calculates a target travel route to ensure that the loading portion of the hauling vehicle is included in the loadable range, while the mounting portion of the hauling vehicle is not included in the loadable range, and sends this to the route following control section 350. The calculation method of the target travel route may use a known route search method, but it is a method of selecting the shortest route from all possible routes. An example of the target travel route will be described later.

The route following control section 350 receives the position information of the hauling vehicle from the positioning devices 71a, 71b and the target travel route from the travel route calculation section 340, and sends travel control signals to the travel drive device 91 installed on the hauling vehicle to align the position of the hauling vehicle with the target travel route.

The stop hold control section 360, upon receiving the loading preparation completion flag from the communication interface 80, sends a parking brake control signal to the parking brake drive device 93 installed in the hauling vehicle to activate the parking brake of the hauling vehicle.

The loading preparation notification section 370, upon receiving the loadable range from the communication interface 80, sends a display control signal to a display device 81 installed in the hauling vehicle or the management system of the hauling vehicle to display the loadable range on the display device 81. Then, if the loading preparation notification section 370 receives either the loading preparation error flag or the loading preparation completion flag from the communication interface 80, it displays them on the display device 81 installed in the hauling vehicle or the management system of the hauling vehicle.

This embodiment describes the hauling vehicle that performs autonomous driving, but the application of the present invention is not limited to this, and it may be the hauling vehicle operated by an operator on board or remotely. In addition, each block described in the control device 300 of the hauling vehicle does not necessarily have to be mounted on the hauling vehicle and may be implemented in the management system of the hauling vehicle.

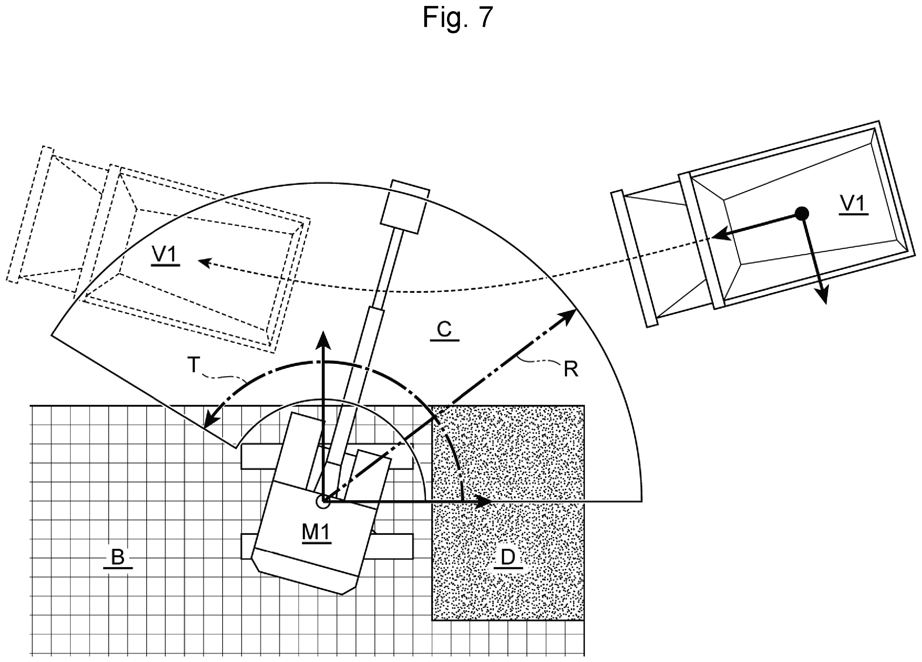

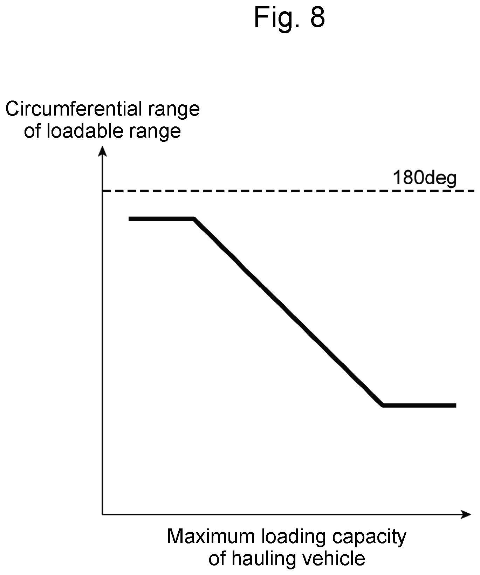

FIG. 7 is a plan view showing an example of the loadable range according to an embodiment of the present invention, and FIG. 8 is a map showing an example of the relationship between the circumferential range of the loadable range and the maximum loading capacity of the hauling vehicle according to an embodiment of the present invention.

In FIG. 7, the loadable range is generated, for example, as a substantially fan-shaped area C. Here, the loadable range C is defined by the radial range R and the circumferential range T on the side where the hauling vehicle V1 is waiting relative to the hydraulic excavator M1, to the left of the lower travel body 5 of the hydraulic excavator M1 in the figure. The radial range R is set, for example, based on the movable range of the bucket 1 relative to the hydraulic excavator M1 with respect to the vehicle body turning center. In addition, the circumferential range T is set, for example, around the vehicle body turning center based on the balance between the time required for loading preparation and the time required for the loading work itself.

For example, as shown in FIG. 8, the circumferential range T may be set to become smaller (in the circumferential direction) as the maximum loading capacity of the hauling vehicle V1 increases. By doing so, hauling vehicles with a large maximum loading capacity and relatively high number of loading cycles have the circumferential range T set to be small (in the circumferential direction), which reduces the swing amount of the hydraulic excavator M1 during loading operations, and it is possible to position the hauling vehicle in a location where the time required for the loading operation itself does not become excessively long. On the other hand, for hauling vehicles with a small maximum loading capacity and relatively low number of loading cycles, the circumferential range T is set to be large (in the circumferential direction), making it easier for the hauling vehicle to reach the loading position, thereby reducing the time required for loading preparation.

In FIG. 7, the loadable range C is set to the left based on the lower travel body 5 of the hydraulic excavator M1, but it may also be based on the direction of the excavation target area D relative to the position of the hydraulic excavator M1, or it may be set to avoid the excavation target area D and the movement area B of the hydraulic excavator M1. Additionally, depending on the position where the hauling vehicle V1 is waiting and the positional relationship of the movement area B with respect to the loading site A and the transport route E, it may be set to the right of the hydraulic excavator M1. In any case, the hauling vehicle or the management system of the hauling vehicle can set a position that is easy for the hauling vehicle V1 to reach as the target stop position within the loadable range, allowing loading operations to be performed at a position that is both loadable and easy for the hauling vehicle to reach.

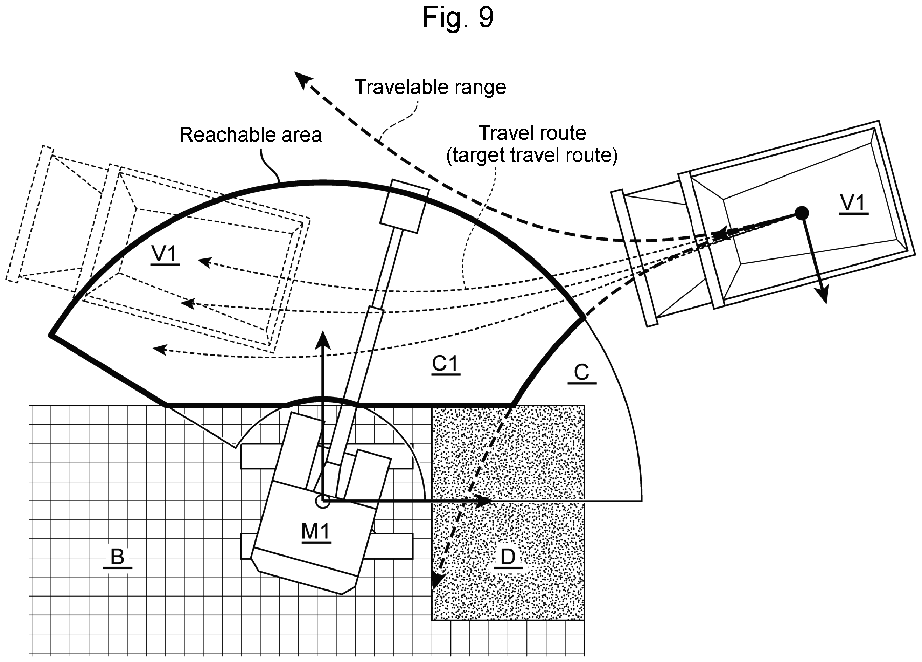

FIG. 9 is a plan view showing an example of the target travel route of the hauling vehicle according to an embodiment of the present invention, and FIG. 10 is a plan view showing an example of the loading possibility determination and loading prohibition necessity determination according to an embodiment of the present invention.

In FIG. 9, the dashed line extending from the hauling vehicle V1 represents the travelable range based on the steering characteristics of the hauling vehicle. Furthermore, since the hauling vehicle V1 cannot travel in the movement area B (and the excavation target area D included therein), the range within the loadable range C that the hauling vehicle V1 can reach is the area C1 enclosed by the thick solid line in the figure. The travel route calculation section 340 of the hauling vehicle V1 plans multiple travel routes that pass through the reachable area C1, where the loading portion of the hauling vehicle is included in the loadable area C, but the mounting portion of the hauling vehicle is not included in the loadable area C (indicated by the dotted lines in the figure). Then, the travel route calculation section 340 selects the shortest route among them as the target travel route.

In FIG. 10, the hauling vehicle V1 travels (moves) along the selected target travel route from the standby position to the reachable range C1. Then, based on whether the loading portion L (which is the first portion where the object is loaded) of the hauling vehicle V1 is included in the loadable range C, the loading possibility is determined. For example, if the proportion of the range LC of the loading portion included in the loadable range C relative to the loading portion L of the hauling vehicle V1 is equal to or greater than a predetermined value, it is determined to be loadable, and if the proportion of the range LC of the loading portion included in the loadable range C is less than the predetermined value, it may be determined to be not loadable.

In FIG. 10, the hauling vehicle V1 travels (moves) along the selected target travel route within the reachable range C1 from the standby position. Then, based on whether the mounting portion H (which is the second portion and is equipped with an operator's seat and sensors for autonomous driving) of the hauling vehicle V1 is included in the loadable range C, it determines the necessity of prohibiting loading. For example, if any part of the mounting portion H of the hauling vehicle V1 is included in the loadable range C, it is determined that loading prohibition is necessary, and if the mounting portion H of the hauling vehicle V1 is not included in the loadable range C at all, it may be determined that loading prohibition is unnecessary.

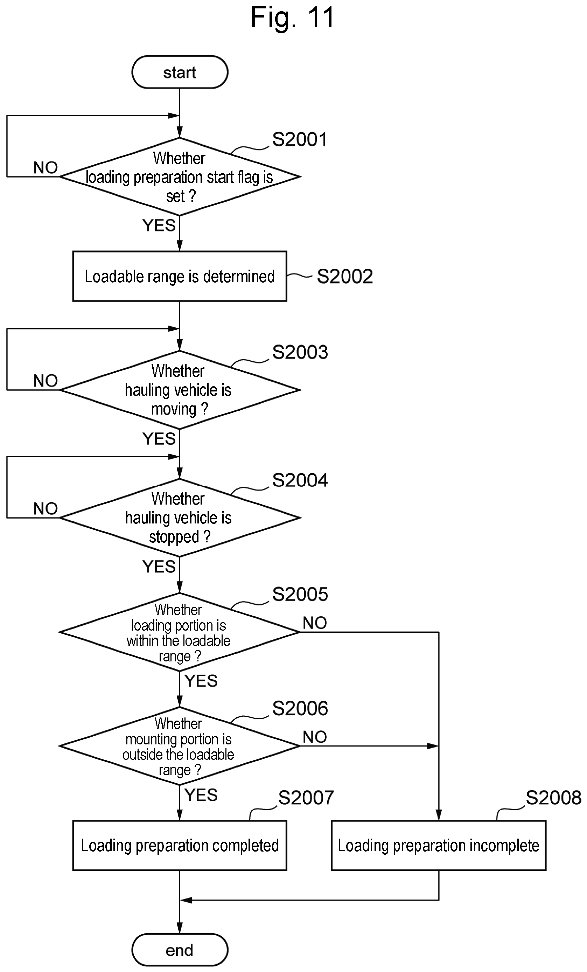

FIG. 11 is a flowchart of the processing performed by the loading preparation support device according to an embodiment of the present invention.

In FIG. 11, at step S2001, it is determined whether the loading preparation start flag received from the waiting hauling vehicle (in other words, located at a standby position away from the loadable range) or the management system of the hauling vehicle is set, and if the loading preparation start flag is set, proceed to step S2002.

At step S2002, the loadable range is determined, and proceed to step S2003.

At step S2003, it is determined whether the hauling vehicle is moving, and if it is moving, proceed to step S2004.

At step S2004, it is determined whether the hauling vehicle is stopped, and if it is stopped, proceed to step S2005. In other words, if the hauling vehicle moves along the target travel route from the standby position and then stops, proceed to step S2005.

At step S2005, it is determined whether the loading portion L, which is the first portion of the hauling vehicle V1, is within the loadable range. If the loading portion L, which is the first portion of the hauling vehicle V1, is within the loadable range, it is judged as loadable and proceed to step S2006, otherwise, it is judged as not loadable and proceed to step S2008.

At step S2006, it is determined whether the mounting portion H, which is the second portion of the hauling vehicle V1, is outside the loadable range. If the mounting portion H, which is the second portion of the hauling vehicle V1, is outside the loadable range, it is judged as no need for loading prohibition and proceed to step S2007, otherwise, it is judged as need for loading prohibition and proceed to step S2008.

At step S2007, the loading preparation completion flag is set as loading preparation completed. In other words, when the loading portion L of the hauling vehicle V1 is included in the loadable range (within the loadable range) and the entire mounting portion H of the hauling vehicle V1 is not included in the loadable range (outside the loadable range), the loading preparation completion flag is sent to the hauling vehicle or the management system of the hauling vehicle via communication interfaces 60, 80 as loading preparation completed.

On the other hand, at step S2008, the loading preparation error flag is set as loading preparation incomplete. In other words, when the loading portion L of the hauling vehicle V1 is not included in the loadable range (outside the loadable range), or when at least part of the mounting portion H of the hauling vehicle V1 is included in the loadable range (within the loadable range) (more specifically, even if the loading portion L of the hauling vehicle V1 is included in the loadable range (within the loadable range), if at least part of the mounting portion H of the hauling vehicle V1 is included in the loadable range (within the loadable range)), the loading preparation error flag is sent to the hauling vehicle or the management system of the hauling vehicle via communication interfaces 60, 80 as loading preparation incomplete.

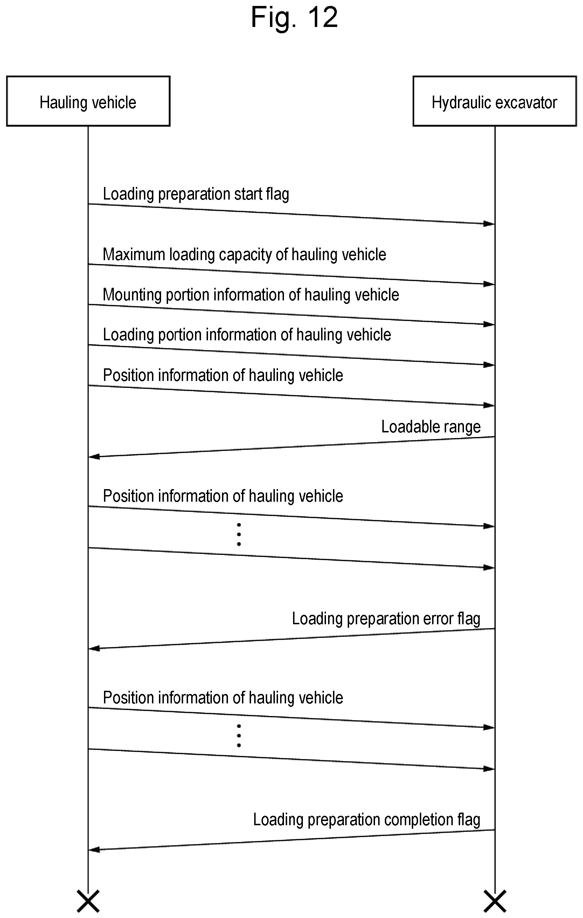

FIG. 12 is an example of a communication sequence diagram between the hauling vehicle and the hydraulic excavator during loading preparation according to an embodiment of the present invention.

In FIG. 12, loading preparation is initiated by the transmission of the loading preparation start flag from the hauling vehicle (loading preparation start determination section 310). The hauling vehicle, following the loading preparation start flag, transmits the maximum loading capacity, mounting portion information, loading portion information, and position information of the hauling vehicle (vehicle information transmission section 320, vehicle position transmission section 330). The hydraulic excavator, upon receiving the loading preparation start flag, refers to the maximum loading capacity and position information of the hauling vehicle, calculates the loadable range, and transmits it to the hauling vehicle (loadable range calculation section 210).

The hauling vehicle calculates the target travel route according to the received loadable range and starts traveling (travel route calculation section 340, route following control section 350). Additionally, the hauling vehicle periodically transmits its position information to the hydraulic excavator while traveling along the target travel route (vehicle position transmission section 330).

The hydraulic excavator, based on the received position information of the hauling vehicle, determines that the hauling vehicle has stopped, and judges whether the loading portion, which is the first portion of the hauling vehicle, is included in the loadable range and the mounting portion, which is the second portion of the hauling vehicle, is not included in the loadable range, and if either condition is not met, sends a loading preparation error flag (loading possibility determination section 220, loading prohibition necessity determination section 230, loading preparation completion determination section 240).

If the hauling vehicle receives a loading preparation error flag, it recalculates the target travel route according to the loadable range and starts traveling again (travel route calculation section 340, route following control section 350), and periodically transmits its position information to the hydraulic excavator (vehicle position transmission section 330).

The hydraulic excavator, based on the received position information of the hauling vehicle, performs the previous determination and sends a loading preparation completion flag when the loading portion, which is the first portion of the hauling vehicle, is included in the loadable range and the mounting portion, which is the second portion of the hauling vehicle, is not included in the loadable range (loading possibility determination section 220, loading prohibition necessity determination section 230, loading preparation completion determination section 240).

If the hauling vehicle receives a loading preparation completion flag, it activates the parking brake and transitions to the loading work (stop holding control section 360). In this way, it is possible to support the loading preparation until the hauling vehicle approaches the hydraulic excavator for loading from the hydraulic excavator to the hauling vehicle.

As described above, the work machine (hydraulic excavator M1) of this embodiment includes a controller (loading preparation support device 200) that supports loading preparation until the hauling vehicle approaches the work machine for loading from the work machine to the hauling vehicle, based on the position information of the work machine and the position information of the hauling vehicle. The controller (loading preparation support device 200) determines the loadable range (around the vehicle body) as information indicating the range where the hauling vehicle should stop during loading, based on the movable range of the work machine when starting the loading preparation. Then, the controller (loading preparation support device 200) transmits (notifies) the loadable range to the hauling vehicle or the management system of the hauling vehicle located at a standby position away from the loadable range, and starts loading to the hauling vehicle when the loading portion of the hauling vehicle that moved (and stopped) from the standby position based on the loadable range (along the target travel route) is included in the loadable range (judged as loadable).

Additionally, the controller (loading preparation support device 200) does not start loading to the hauling vehicle when the operator's seat or the mounting portion of the autonomous driving sensor of the hauling vehicle that moved (and stopped) from the standby position based on the loadable range (along the target travel route) is included in the loadable range (judged as need for loading prohibition).

Additionally, the controller (loading preparation support device 200) starts loading to the hauling vehicle when the proportion of the range of the loading portion included in the loadable range exceeds a predetermined value (judged as loadable).

Additionally, the controller (loading preparation support device 200) does not start loading to the hauling vehicle when at least part of the mounting portion of the hauling vehicle is included in the loadable range (judged as need for loading prohibition).

Additionally, the controller (loading preparation support device 200) determines the circumferential range around the vehicle body of the loadable range based on the maximum loading capacity of the hauling vehicle.

Additionally, the controller (loading preparation support device 200) reduces the circumferential range around the vehicle body of the loadable range in the circumferential direction as the maximum loading capacity of the hauling vehicle increases.

Additionally, the controller (loading preparation support device 200) calculates the loadable range after receiving the loading preparation start flag transmitted from the hauling vehicle or the management system of the hauling vehicle.

Additionally, the controller (loading preparation support device 200) determines the loadable range based on the movable range of the work machine and the position information of the hauling vehicle.

Additionally, the controller (loading preparation support device 200) sends a loading preparation completion flag to the hauling vehicle or the management system of the hauling vehicle when the loading portion of the hauling vehicle is included in the loadable range (judged as included) and the entire mounting portion of the hauling vehicle is not included in the loadable range (judged as not included).

Furthermore, the controller (loading preparation support device 200) sends a loading preparation error flag to the hauling vehicle or the management system of the hauling vehicle if it determines that the loading portion of the hauling vehicle is not included in the loadable range, or if at least part of the mounting portion of the hauling vehicle is included in the loadable range.

Additionally, the controller (loading preparation support device 200) sends a loading preparation error flag to the hauling vehicle or the management system of the hauling vehicle if it determines that at least a portion of the mounting portion of the hauling vehicle is included in the loadable range, even if it determines that the loading portion of the hauling vehicle is included in the loadable range.

More specifically, the work machine (hydraulic excavator M1) in this embodiment includes a loading preparation support device 200, which is a controller that supports loading preparation until the hauling vehicle approaches the work machine based on the position information of the work machine and the hauling vehicle, and an actuator control device 600 that controls the operation of the work machine's actuators according to commands from the loading preparation support device 200. The loading preparation support device 200 includes a loadable range calculation section 210 that calculates the loadable range (around the vehicle body) as information indicating the range where the hauling vehicle should stop during loading based on the movable range of the work machine, and a loading possibility determination section 220 that determines the possibility of loading onto the hauling vehicle based on the information of the loading portion of the hauling vehicle that has moved (and stopped) from the standby position based on the loadable range. The loading possibility determination section 220 determines that loading onto the hauling vehicle is possible if the loading portion of the hauling vehicle is included in the loadable range, and the work machine (hydraulic excavator M1) starts the loading work onto the hauling vehicle by controlling the operation of the actuators with the actuator control device 600 if it is determined that loading is possible.

Furthermore, the loading preparation support device 200 includes a loading prohibition necessity determination section 230 that determines the necessity of prohibiting loading onto the hauling vehicle based on the information of the operator's seat or the mounting portion of the autonomous driving sensor of the hauling vehicle that has moved from the standby position based on the loadable range. The loading prohibition necessity determination section 230 determines that loading prohibition is necessary if the mounting portion of the hauling vehicle is included in the loadable range. Then, the work machine (hydraulic excavator M1) does not start the loading work onto the hauling vehicle if it is determined that loading prohibition is necessary.

Additionally, the loading possibility determination section 220 determines that loading onto the hauling vehicle is possible if the proportion of the range of the loading portion included in the loadable range exceeds a predetermined value.

Moreover, the loading prohibition necessity determination section 230 determines that loading prohibition is necessary if at least part of the mounting portion of the hauling vehicle is included in the loadable range.

Furthermore, the loadable range calculation section 210 determines the circumferential range around the vehicle body of the loadable range based on the maximum loading capacity of the hauling vehicle.

Additionally, the loadable range calculation section 210 reduces the circumferential range around the vehicle body of the loadable range in the circumferential direction as the maximum loading capacity of the hauling vehicle increases.

Moreover, the loadable range calculation section 210 calculates the loadable range after receiving the loading preparation start flag sent from the hauling vehicle or the management system of the hauling vehicle.

Furthermore, the loadable range calculation section 210 determines the loadable range based on the movable range of the work machine and the position information of the hauling vehicle.

Additionally, the loading preparation support device 200 includes a loading preparation completion determination section 240 that determines whether the loading preparation for the hauling vehicle is complete. The loading preparation completion determination section 240 sends a loading preparation completion flag to the hauling vehicle or its management system when the loading possibility determination section 220 determines that loading to the hauling vehicle is possible and the loading prohibition necessity determination section 230 determines that loading prohibition is unnecessary.

Additionally, the loading preparation support device 200 includes a loading preparation completion determination section 240 that determines whether the loading preparation for the hauling vehicle is complete. The loading preparation completion determination section 240 sends a loading preparation error flag to the hauling vehicle or its management system when the loading possibility determination section 220 determines that loading to the hauling vehicle is not possible, or the loading prohibition necessity determination section 230 determines that loading prohibition is necessary.

Additionally, the loading preparation support device 200 includes a loading preparation completion determination section 240 that determines whether the loading preparation for the hauling vehicle is complete. The loading preparation completion determination section 240 sends a loading preparation error flag to the hauling vehicle or its management system, if the loading prohibition necessity determination section 230 determines that loading prohibition is necessary, even if the loading possibility determination section 220 determines that loading to the hauling vehicle is possible.

That is, the controller (loading preparation support device 200) of the work machine (hydraulic excavator M1) in this embodiment transmits the loadable range of the work machine to the hauling vehicle, allowing loading work to be performed at a loadable position that is easily reachable by the hauling vehicle.

As described above, in this embodiment, the position of the hauling vehicle relative to the work machine (hydraulic excavator M1) can be arranged to be loadable and easily accessible for loading operations by the controller (loading preparation support device 200) of the work machine. Additionally, loading work can be performed at a position where the work machine or object is unlikely to contact the operator's seat or the mounting portion of the autonomous driving sensor of the hauling vehicle. Furthermore, the hauling vehicle can be positioned so that the time required for the loading work itself does not become excessively long. Moreover, by calculating the loadable range after receiving the loading preparation start flag sent from the hauling vehicle or its management system, loading preparation can be started at the timing when the hauling vehicle wants to start loading preparation (for example, when the order of the hauling vehicle becomes first), reducing the possibility of other hauling vehicles mistakenly starting loading preparation. Additionally, by determining the loadable range based on the position information of the hauling vehicle in addition to the movable range of the work machine, the loadable range can be set on the side of the work machine closer to the hauling vehicle. Furthermore, by sending a loading preparation completion flag from the work machine to the hauling vehicle, the hauling vehicle can be made to maintain its stop position during loading work. Additionally, by sending a loading preparation error flag from the work machine to the hauling vehicle, the hauling vehicle can be made to correct its position if it is not suitable for loading work.

The embodiments of the present invention have been described in detail above, but the present invention is not limited to the above-described embodiments and includes various modifications. For example, the above-described embodiment applies the present invention to a hydraulic excavator equipped with a standard bucket as a working tool at the tip of the front work machine, but the application of the present invention is not limited to this and can also be applied to work machines equipped with attachments having gripping mechanisms. Additionally, the above-described embodiment applies the present invention to a hydraulic excavator that performs loading work through autonomous driving, but the application of the present invention is not limited to this and can also be applied to work machines operated by an operator either on board or remotely. Furthermore, the above-described embodiment is explained in detail to clearly describe the present invention and is not necessarily limited to including all the configurations described.

Additionally, each of the above configurations, functions, processing sections, processing means, etc., may be realized in hardware (for example, designed as integrated circuits) in whole or in part. Additionally, each of the above configurations, functions, etc., may be realized in software by a processor interpreting and executing programs that realize each function. Information such as programs, tables, files, etc., that realize each function can be stored in memory, storage devices such as hard disks, SSDs (Solid State Drives), or recording media such as IC cards, SD cards, DVDs, etc.

Additionally, control lines and information lines are shown as necessary for explanation and do not necessarily indicate all control lines and information lines in the product. In practice, it may be considered that almost all configurations are interconnected.

### Reference Signs List

1: Bucket, 2: Arm, 3: Boom, 10: Engine, 11: Hydraulic pump, 12: Control valve, 51a,51b: Positioning device, 52a,52b,52c,52d: Posture sensor, 100: Autonomous driving control device, 110: Behavior management section, 120: Operation planning section, 130: Operation control section, 200: Loading preparation support device (Controller), 210: Loadable range calculation section, 220: Loading possibility determination section, 230: Loading prohibition necessity determination section, 240: Loading preparation completion determination section, 300: Hauling vehicle control device, 500: Engine control device, 600: Actuator control device, M1: Hydraulic excavator (Work machine), V1: Hauling vehicle

## Claims

1. A work machine comprising:
a loading preparation support device, which is a controller that supports loading preparation until a hauling vehicle approaches the work machine for loading from the work machine to the hauling vehicle based on the position information of the work machine and the hauling vehicle; and
an actuator control device that controls the operation of the actuator of the work machine according to commands from the loading preparation support device, wherein
the loading preparation support device is configured to:
a loadable range calculation section that calculates the loadable range as information indicating the range where the hauling vehicle should stop during loading based on the movable range of the work machine; and
a loading possibility determination section that determines the possibility of loading onto the hauling vehicle based on the information of the loading portion of the hauling vehicle moved from the standby position based on the loadable range, and the loadable range;
the loading possibility determination section determines that loading onto the hauling vehicle is possible if the loading portion of the hauling vehicle is included in the loadable range;
the work machine, when it is determined that loading onto the hauling vehicle is possible, starts the loading operation onto the hauling vehicle by controlling the operation of the actuator through the actuator control device.

2. The work machine according to claim 1;
wherein the loading preparation support device includes a loading prohibition necessity determination section that determines the necessity of prohibiting loading onto the hauling vehicle based on the information regarding the mounting portion of an operator's seat or an autonomous driving sensor of the hauling vehicle that has moved from the standby position based on the loadable range, and the loadable range;
the loading prohibition necessity determination section determines that loading onto the hauling vehicle is prohibited when the mounting portion of the hauling vehicle is included in the loadable range;
the work machine, when it is determined that loading onto the hauling vehicle is prohibited, does not start the loading operation onto the hauling vehicle.

3. The work machine according to claim 1;
wherein the loading possibility determination section determines that loading onto the hauling vehicle is possible when the proportion of the loading portion range included in the loadable range for the loading portion of the hauling vehicle is equal to or greater than a predetermined value.

4. The work machine according to claim 2;
wherein the loading prohibition necessity determination section determines that loading onto the hauling vehicle is prohibited when at least part of the mounting portion of the hauling vehicle is included in the loadable range.

5. The work machine according to claim 1;
wherein the loadable range calculation section determines the circumferential range around the vehicle body of the loadable range based on the maximum load capacity of the hauling vehicle.

6. The work machine according to claim 1;
wherein the loadable range calculation section reduces the circumferential range around the vehicle body of the loadable range in the circumferential direction as the maximum load capacity of the hauling vehicle increases.

7. The work machine according to claim 1;
wherein the loadable range calculation section calculates the loadable range after receiving the loading preparation start flag transmitted from the hauling vehicle or a management system of the hauling vehicle.

8. The work machine according to claim 1;
wherein the loadable range calculation section determines the loadable range based on the movable range of the work machine and the position information of the hauling vehicle.

9. The work machine according to claim 2;
wherein the loading preparation support device includes a loading preparation completion determination section that determines whether the loading preparation for the hauling vehicle is complete;
the loading preparation completion determination section sends a loading preparation completion flag to the hauling vehicle or the management system of the hauling vehicle when the loading possibility determination section determines that loading onto the hauling vehicle is possible and the loading prohibition necessity determination section determines that loading prohibition onto the hauling vehicle is not necessary.

10. The work machine according to claim 2;
wherein the loading preparation support device includes a loading preparation completion determination section that determines whether the loading preparation for the hauling vehicle is complete;
the loading preparation completion determination section sends a loading preparation error flag to the hauling vehicle or the management system of the hauling vehicle when the loading possibility determination section determines that loading onto the hauling vehicle is impossible, or the loading prohibition necessity determination section determines that loading prohibition onto the hauling vehicle is necessary.

11. The work machine according to claim 2,
wherein the loading preparation support device includes a loading preparation completion determination section that determines whether the loading preparation for the hauling vehicle is complete;
the loading preparation completion determination section, even when it is determined by the loading possibility determination section that loading onto the hauling vehicle is possible, sends a loading preparation error flag to the hauling vehicle or the management system of the hauling vehicle when it is determined by the loading prohibition necessity determination section that loading onto the hauling vehicle is prohibited.
